# NEUE EUROPÄISCHE PATENTSCHRIFT

(11) **EP 2 300 736 B2**
(45) Veröffentlichungstag und Bekanntmachung des Hinweises auf die Entscheidung über den Einspruch: **09.11.2016**
(45) Hinweis auf die Patenterteilung: 10.10.2012
(21) Anmeldenummer: 09771990.0
(22) Anmeldetag: 12.06.2009
(51) Int. Cl.: F16H 45/02, F16F 15/137, F16F 15/14

(54) **HYDRODYNAMISCHER DREHMOMENTWANDLER**
HYDRODYNAMIC TORQUE CONVERTER
CONVERTISSEUR DE COUPLE HYDRODYNAMIQUE

(30) Priorität: 04.07.2008 DE 102008031431; 14.08.2008 DE 102008037808
(43) Veröffentlichungstag der Anmeldung: 30.03.2011
(73) Patentinhaber: Schaeffler Technologies AG & Co. KG, 91074 Herzogenaurach (DE)
(72) Erfinder: MAGERKURTH, Heiko, 79106 Freiburg im Breisgau (DE); HÜGEL, Christian, 77866 Rheinau (DE); MEISSNER, Andreas, 76131 Karlsruhe (DE)
(86) Internationale Anmeldenummer: PCT/DE2009/000819
(87) Internationale Veröffentlichungsnummer: WO 2010/000220

(56) Entgegenhaltungen:
- EP-B1- 0 200 634
- WO-A-2009/067988
- WO-A1-2004/018897
- DE-A1- 10 358 901
- DE-A1- 19 804 227
- DE-A1-102006 028 556
- DE-A1-102008 057 647
- DE-A1-102008 057 648
- DE-A1-102009 021 355
- US-A- 3 800 931
- US-A- 6 026 940

## Beschreibung

Die Erfindung betrifft einen hydrodynamischen Drehmomentwandler mit einer Überbrückungskupplung und einen mehrstufigen Drehschwingungsdämpfer.

Derartige Drehmomentwandler werden insbesondere in Antriebssträngen von Kraftfahrzeugen zwischen einer Brennkraftmaschine und einem Getriebe angewendet. Zur Dämpfung von Drehschwingungen der Brennkraftmaschine werden dabei sogenannte Drehschwingungsdämpfer verwendet, die über ein Eingangsteil angetrieben werden, wobei das Drehmoment über Energiespeicher auf ein relativ zu diesem begrenzt verdrehbaren Ausgangsteil übertragen wird und durch Komprimierung der Energiespeicher die Energie von Drehmomentspitzen zwischengespeichert wird und in Drehmomenttälern wieder an das Ausgangsteil abgegeben wird. Die Beschaltung eines Drehmomentwandlers erfolgt dabei mittels einer Dämpfungseinrichtung als sogenannter konventioneller Dämpfer zwischen die Wandlerüberbrückungskupplung und die Abtriebsnabe des Drehmomentwandlers, so dass bei geschlossener Wandlerüberbrückungskupplung eine Dämpfung von Drehschwingungen über den Drehmomentpfad zwischen Wandlergehäuse und Abtriebsnabe erfolgt. Weiterhin sind sogenannte Turbinendämpfer bekannt, die bei offener oder nicht vorhandener Wandlerüberbrückungskupplung nach der bereits hydraulischen Dämpfung zwischen Pumpen- und Turbinenrad noch verbliebene Drehschwingungen dämpfen und hierzu zwischen Turbinenrad und Abtriebsnabe angeordnet sind. Weiterhin sind Kombinationen beider Dämpfertypen bekannt.

Eine andere Form der Verminderung von Drehschwingungen ist das Tilgerprinzip, bei dem an einem Aufnahmeteil bewegliche Massen entgegen der Wirkung von Energiespeichern angeordnet sind oder im Falle von Fliehkraftpendeln Tilgermassen auf in Umfangsrichtung und in radiale verlaufende Laufbahnen verschwenkbar angeordnet sind und sich dadurch abhängig von Schwingungseinflüssen das Trägheitsmoment des Aufnahmeteils verändert wird.

Wie die restriktiveren Bauraumvorgaben in Kraftfahrzeugen, insbesondere bei Quereinbauten von Antriebseinheiten, bestehend aus Brennkraftmaschine und Getriebe sowie dazwischen angeordnetem Drehmomentwandler, steigen auch die Bauraumanforderungen an die Ausgestaltung von Drehmomentwandlern bei ausreichender Schwingungsisolation. Aufgabe der Erfindung ist daher die Weiterbildung eines Drehmomentwandlers mit geringem Bauraum bei gleichzeitig ausreichender Schwingungsisolation.

Die Aufgabe wird durch einen hydrodynamischen Drehmomentwandler gemäss Anspruch 1 gelöst. Durch die vorgeschlagene Anordnung kann ein Drehschwingungstilger, beispielsweise ein Fliehkraftpendel, beiden Dämpferstufen zur Verfügung gestellt werden, so dass die Dämpferstufen insgesamt mit geringerem Bauraumbedarf ausgelegt werden können. Ein weiterer Vorteil ist die Aufteilung des Drehschwingungsdämpfers in zumindest zwei Dämpferstufen, wobei der Drehschwingungsdämpfer zwei Funktionen ausübt, nämlich die eines seriellen (Reihen-) Dämpfers und die eines Turbinendämpfers. Durch die Integration der beiden Dämpferstufen in einen einzigen Dämpfer, der gleichzeitig einen beiden Dämpferstufen zugeordneten Drehschwingungstilger aufweist, kann eine Vielzahl von Bauteilen gemeinsam genutzt werden, so dass insgesamt bei vorgegebenem Bauraum und Dämpfungsleistung ein leichterer und schmalerer Drehmomentwandler vorgeschlagen werden kann. Zur Drehmomenterhöhung insbesondere im niedrigen Drehzahlbereich kann zwischen Pumpenrad und Turbinenrad weiterhin ein Leitrad mit Freilauf gehäusefest angeordnet sein.

Der gemeinsame erfinderische Gedanken umfasst hierzu eine Mehrzahl von zusätzlichen Maßnahmen, die in Kombination oder für sich angewendet, zu einem schmaleren Bauraum führen. Beispielsweise können ein Eingangsteil der ersten Dämpferstufe und ein Ausgangsteil der zweiten Dämpferstufe aufeinander zentriert sein, so dass auf demselben axialen Bauraum ein Eingangsteil und ein Ausgangsteil untergebracht werden können. Die beiden Bauteile sind dabei verdrehbar gegeneinander gelagert. Beispielsweise kann ein Ausgangsteil der zweiten Dämpferstufe radial innerhalb der ersten Dämpferstufe angeordnet sein.

Weiterhin können mehrere Bauteile der beiden bezüglich ihrer Funktion unterschiedlichen Dämpferstufen gemeinsam ausgebildet sein. Beispielsweise kann zumindest ein Scheibenteil von einem Eingangs- und einem Ausgangsteil zweier Dämpferstufen einteilig ausgebildet sind. So kann ein Ausgangsteil einer radial äußeren Dämpferstufe gleichzeitig eine Fliehkraftabstützung ausbilden, indem das Scheibenteil entsprechend radial außen zumindest teilweise um die Energiespeicher herumgeführt ist. Radial innen können Fensterausschnitte zur Aufnahme der Energiespeicher vorgesehen sein. Weiterhin kann ein derart ausgebildetes Scheibenteil die Turbinennabe bilden oder die Turbinenschale kann zumindest an diesem Scheibenteil aufgenommen, beispielsweise vernietet sein. Radial innen kann dieses Scheibenteil auf der Abtriebsnabe verdrehbar aufgenommen sein, so dass mit einem Flanschteil der Abtriebsnabe unter Zwischenschaltung von in Umfangsrichtung wirksamen Energiespeichern die zweite Dämpferstufe als Turbinendämpfer gebildet werden kann.

Der Drehschwingungstilger wird in bevorzugter Weise als Fliehkraftpendel ausgebildet, wobei ein die über den Umfang verteilten Tilgermassen aufnehmendes Aufnahmeteil des Drehschwingungstilgers und ein Scheibenteil des Eingangsteils einer Dämpferstufe einteilig ausgebildet sein können. Dabei kann ein zweiteiliges Eingangsteil beispielsweise der zweiten Dämpferstufe aus zwei axial beabstandeten Scheibenteilen gebildet sein, wobei das erste Scheibenteil gleichzeitig das Aufnahmeteil darstellt und das zweite Scheibenteil einteilig mit dem Ausgangsteil der ersten Dämpferstufe ausgebildet ist. Das nicht das Aufnahmeteil enthaltende Scheibenteil ist zur Anbindung des Drehschwingungstilgers an die erste Dämpferstufe mit dem anderen Scheibenteil mittels Befestigungsmitteln wie Nieten drehschlüssig verbunden.

Zur Minimierung des axialen Bauraums können Bauteile axial übergreifend angeordnet werden, indem diese radial dort angeordnet werden, wo das andere Bauteil einen radialen Einschnitt oder Einschnürung aufweist. Beispielsweise können Tilgermassen des Drehschwingungstilgers und über den Umfang angeordnete Energiespeicher der ersten Dämpferstufe auf radial gleicher Höhe und axial beabstandet voneinander angeordnet sein, wobei ein mittlerer Aufnahmedurchmesser der Energiespeicher radial außerhalb des Turbinenrads angeordnet ist. Auf diese Weise können die Energiespeicher das Turbinenrad, beispielsweise an dessen sich am Außenumfang verjüngenden Torus, zumindest teilweise axial übergreifen.

Weiterhin können über den Umfang verteilte Energiespeicher der zweiten Dämpferstufe bezogen auf einen mittleren Aufnahmedurchmesser radial innerhalb von Turbinenschaufeln des Turbinenrads angeordnet sein. Die Energiespeicher der zweiten Dämpferstufe können dabei insbesondere durch die Torusform des Turbinenrads so nah an die Turbinenschale herangebracht werden, dass sich radial äußere Bereiche des Turbinenrads und die axialen Randbereiche der Energiespeicher axial überschneiden. Insgesamt kann damit der Drehschwingungsdämpfer eng an das Turbinenrad angenähert werden., so dass der Abschluss des Drehschwingungsdämpfers in Richtung der Wandlerüberbrückungskupplung im Wesentlichen plan ist und die Wandlerüberbrückungskupplung nah an den Drehschwingungsdämpfer angenähert werden kann.

Erfindungsgemäß ist zur weiteren Verminderung des axialen Bauraums die Wandlerüberbrückungskupplung im geschlossenen Zustand axial in einer radial innerhalb von außerhalb des Drehmomentwandlers vorgesehenen Befestigungsmitteln angeordneten, in einer Gehäusewandung ausgeformten Tasche untergebracht. Auf diese Weise kann der Drehmomentwandler an eine Flexplate oder ein Antriebsblech eng angeordnet werden, wobei eine radial um die Drehachse angeordnete Einschnürung des Wandlergehäuses axialen Bauraum für die Kurbelwelle mit einer Aufnahme für die Flexplate bereitstellen kann.

Die Wandlerüberbrückungskupplung ist weiterhin erfindungsgemäß radial innerhalb der Tilgermassen angeordnet. Zur Erhöhung der Kapazität des übertragbaren Moments bei derartig verkleinertem Reibdurchmesser ist die Wandlerüberbrückungskupplung mit einer Reiblamelle ausgestattet, die von einem auf der Abtriebsnabe zentrierten und an dem Gehäuse axial verlagerbar und drehfest aufgenommen Kolben axial gegenüber dem Wandlergehäuse zur Bildung eines Reibeingriffs verspannt wird.

Das Aufnahmeteil für die Tilgermassen ist axial zwischen Wandlerüberbrückungskupplung und der ersten Dämpferstufe angeordnet. Zur Übertragung des Drehmoments von der Wandlerüberbrückungskupplung auf die erste Dämpferstufe sind hierzu Übergangsverbindungen zwischen der Wandlerüberbrückungskupplung und dem Eingangsteil der ersten Dämpferstufe vorgesehen, die durch das Aufnahmeteil geführt sind. Zur Ermöglichung eines Verdrehspiels zwischen dem ausgangsseitig fest verbundenen Aufnahmeteil und dem Eingangsteil der ersten Dämpferstufe sind die Durchführungsöffnungen im Aufnahmeteil kreissegmentförmig vorgesehen. Des Weiteren dienen die Durchführungsöffnungen als Anschläge und leiten bei Aufbrauch des Verdrehspiels der ersten Dämpferstufe das Drehmoment mittels der Übertragungsverbindungen direkt in die zweite Dämpferstufe ein.

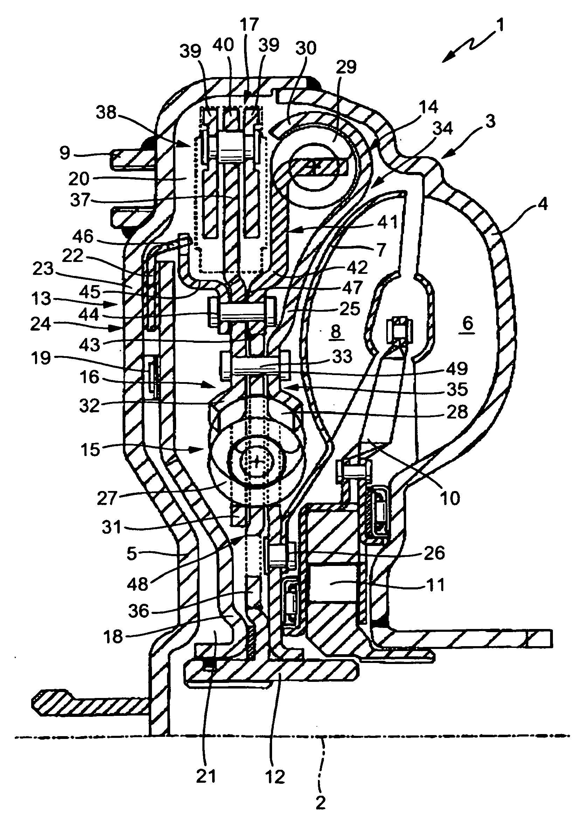

Die Erfindung wird anhand des in der einzigen Figur gezeigten Ausführungsbeispiels näher erläutert. Diese zeigt einen um eine Drehachse angeordneten hydrodynamischen Drehmomentwandler im Halbschnitt.

Die Figur zeigt den hydrodynamischen Drehmomentwandler 1 im Halbschnitt oberhalb der Drehachse 2. Das Gehäuse 3 ist aus den Gehäuseteilen 4, 5 gebildet, die nach Komplettierung der Innenteile miteinander verschweißt werden. In das Gehäuseteil 4 ist das Pumpenrad 6 integriert, so dass bei einer Verdrehung des Gehäuses 3 das Turbinenrad 7 mit den Turbinenschaufeln 8 durch das im Gehäuse 3 befindliche Wandlerfluid angetrieben wird. Das Gehäuse 3 wird von einer nicht dargestellten Brennkraftmaschine angetrieben. Hierzu sind an dem Gehäuseteil 5 Befestigungsmittel 9 angebracht beispielsweise verschweißt, mittels derer ein vorzugsweise axial elastisches und in Umfangsrichtung festes Antriebsblech oder Flexplate, das mit der Kurbelwelle der Brennkraftmaschine fest verbunden ist, mit dem Gehäuse 3 nach Zusammenfügen des am Getriebe montierten Drehmomentwandlers und der Brennkraftmaschine fest verbunden wie verschraubt wird. Zwischen Pumpenrad 6 und Turbinenrad 7 ist ein Leitrad 10 über einen Freilauf 11 mit einem nicht dargestellten Getriebestumpf verbunden wie verzahnt.

Das Ausgangsteil des Drehmomentwandlers 1 wird durch die Abtriebsnabe 12 gebildet, die mit einer nicht dargestellten Getriebeeingangswelle des Getriebes drehfest verbunden wie verzahnt ist. In dem Gehäuse 3 ist eine Wandlerüberbrückungskupplung 13 untergebracht, die im geschlossenen Zustand das von der Brennkraftmaschine auf das Gehäuse 3 übertragene Drehmoment über die Dämpferstufen 14, 15 in die Abtriebsnabe 12 leitet. Bei geöffneter Wandlerüberbrückungskupplung 13 fließt das Drehmoment über das Pumpenrad 6 zum Turbinenrad und von dort über die Dämpferstufe 15 in die Abtriebsnabe 12. Bei schlupfender Wandlerüberbrückungskupplung 13 können Teilmomente über beide Drehmomentpfade übertragen werden.

Die Wandlerüberbrückungskupplung 13 ist durch einen auf der Abtriebsnabe 12 verdrehbar, axial verlagerbar und abgedichtet aufgenommenen Kolben 18 gebildet, der mittels Blattfedern 19 drehfest mit dem Gehäuse verbunden ist. Durch Einstellung eines Differenzdrucks zwischen den beiden Kammern 20, 21 stellt der Kolben 18 eine Axialkraft zwischen sich und einer Gehäusewandung 23 ein, so dass sich an der dazwischen eingebrachten Reiblamelle 22 und den Reibflächen des Kolbens 18 und der Gehäusewandung 23 ein Reibschluss ausbildet. Die Gehäusewandung 23 ist als ringförmige Tasche 24 ausgebildet, in der der Kolben 18 und die Reiblamelle 22 bei geschlossener Wandlerüberbrückungskupplung 13 vollständig axial untergebracht sind. Durch Ausbildung der Wandlerüberbrückungskupplung 13 mit einer zweiseitigen Reiblamelle kann diese bei gleichem übertragbarem Moment auf einem Durchmesser untergebracht werden, der radial innerhalb der Befestigungsmittel 9 liegt, so dass eine bauraumneutrale Unterbringung der Wandlerüberbrückungskupplung 13 bezüglich des axialen Bauraums nötig ist. Die Befestigungsmittel 9 können daher bei vorgegebenem radialem Durchmesser axial unter Einschnürung des Gehäuseteils 5 in Richtung Getriebe verlagert werden, so dass der Anschluss an die Flexplate unter Verringerung eines axialen Abstands erfolgen kann.

Der Drehschwingungsdämpfer 16 mit den Dämpferstufen 14, 15 ist als mehrfunktionaler Dämpfer ausgelegt. Die beiden Dämpferstufen 14, 15 sind durch ein zu den Dämpferstufen 14, 15 gehöriges einteiliges Scheibenteil 25 miteinander verbunden, das radial innen auf der Abtriebsnabe 12 verdrehbar zentriert ist. Radial außerhalb ist die Turbinenschale 25 des Turbinenrads 7 mit dem Scheibenteil 25 mittels der Befestigungsmittel 26 wie Nieten verbunden. Radial außerhalb der Befestigungsmittel 26 sind die beispielsweise als über den Umfang verteilte kurze Schraubenfedern gebildeten Energiespeicher 27 der Dämpferstufe 15 in fensterförmigen Ausnehmungen 28 untergebracht, die die Energiespeicher durch entsprechende Anformungen gegen Fliehkrafteinwirkung abstützen. Am Außenumfang des Scheibenteils 25 sind die Energiespeicher 29 der Dämpferstufe 14 aufgenommen und gegen Fliehkraft abgestützt. Hierzu weist das Scheibenteil 25 Anformungen 30 auf, die die Energiespeicher 29 radial umgreifen. Das Scheibenteil 25 bildet dabei das komplette Ausgangsteil 34 der Dämpferstufe 14, während das Scheibenteil 25 in der Dämpferstufe 15 einen Teil des Eingangsteils 35 bildet, das durch ein zweites Scheibenteil 31 mit entsprechenden fensterförmigen Ausnehmungen 32 komplettiert wird. Die beiden Scheibenteile 25, 31 sind gegeneinander mittels der Nieten 33 axial beabstandet und fest verbunden und nehmen in sich den Flanschteil 36, der mit der Abtriebsnabe 12 fest verbunden wie verschweißt oder einteilig ausgebildet ist, auf. Zur Sicherung der Verdrehbarkeit des als Ausgangsteil 48 der beiden Dämpferstufen 14, 15 wirksamen Flanschteils 36 gegenüber dem Eingangsteil 35 der Dämpferstufe 15 sind in dem Flanschteil 36 kreissegmentförmige Ausschnitte 49, wobei nach Aufbrauch des Verdrehspiels die Nieten 33 an den Ausschnitten anschlagen und das Drehmoment des Ausgangsteils 34 der Dämpferstufe 14 auf das Flanschteil 36 und von dort in die Abtriebsnabe 12 übertragen.

In radialer Verlängerung bildet das Scheibenteil 31 in einteiliger Weise das Aufnahmeteil 37 des Drehschwingungstilgers 17, der durch diese Ausgestaltung ein Fliehkraftpendel 38 bildet, indem beidseitig des Aufnahmeteils 37 axial voneinander beabstandete Tilgermassen 39 über den Umfang verteilt sind, die mittels Nieten 40 miteinander verbunden sind und in in Umfangsrichtung und radial verlaufenden, nicht detailliert einsehbaren Laufbahnen geführt sind. Zwischen den Nieten 40 und den Laufbahnen kann eine Lagerung wie Gleit- oder Wälzlagerung vorgesehen sein. Durch die einteilige Verbindung des Aufnahmeteils 37 mit dem Eingangsteil 35 der Dämpferstufe 15 und dem Ausgangsteil 34 der Dämpferstufe 15 über die Nieten 33 ist das Fliehkraftpendel 38 beiden Dämpferstufen parallel zugeordnet.

Das Eingangsteil 41 der Dämpferstufe 14 ist durch ein Ringteil 42 gebildet, das auf einem Zentrierumfang 43 des Flanschteils 36 zentriert ist und mittels Übertragungsverbindungen 44 wie Nieten mit einem Zahnkranz 45 fest verbunden ist, der mit einer Außenverzahnung 46 der Reiblamelle 22 eine Verzahnung bildet. Bei der Montage der beiden Gehäuseteile 4, 5 wird die Verzahnung zwischen der im Gehäuseteil 5 vormontierten Reiblamelle und dem im Gehäuseteil 4 vormontierten Zahnkranz 45 gebildet.

Zur Sicherung der Verdrehbarkeit des Aufnahmeteils 37 beziehungsweise Scheibenteils 31 sind in diesem kreissegementförmige Öffnungen 47 vorgesehen, durch die die Übertragungsverbindungen 44 geführt sind.

Zur weiteren Verringerung des axialen Bauraums sind die Energiespeicher 29 radial außerhalb des Turbinenrads 7 angeordnet und übergreifen dieses zumindest teilweise axial. Die Energiespeicher 27 sind dem Turbinenrad 7 im taillierten Bereich zwischen Turbinenschaufeln 8 und der Befestigung am Scheibenteil 25 angenähert. Die Trägermassen 39 sind eng axial beabstandet zu den Energiespeichern 29 radial außerhalb der Wandlerüberbrückungskupplung 13 angeordnet.

Die Funktionsweise des Drehschwingungsdämpfers 16 wird in den Zustand bei betätigter und nicht betätigter Wandlerüberbrückungskupplung 13 unterschieden. Ist diese geöffnet ist die Dämpferstufe 14 außer Funktion, da das Eingangsteil 41 im Wesentlichen lastfrei ist. Das Drehmoment fließt vom Turbinenrad 7 in der Dämpferstufe 15 über das Eingangsteil 35 und die Energiespeicher 27 in das Ausgangsteil 48 als Flanschteil 36 und von dort über die Abtriebsnabe 12 in die Getriebeeingangswelle.

Bei betätigter Wandlerüberbrückungskupplung 13 wird das Drehmoment über die Reiblamelle 22, die Verzahnung und die Übertragungsverbindungen 44 in das Eingangsteil 41 eingetragen. Das Eingangsteil 41 beaufschlagt die Energiespeicher 29, die Bogenfedern sein können, und diese übertragen das Drehmoment nach Aufbrauch des Verdrehspiels der Ausschnitte 49 durch die anschlagenden Nieten 33 das Drehmoment auf das als gemeinsames Ausgangsteil 48 wirksame Flanschteil 36 und von dort über die Abtriebsnabe 12 auf die Getriebeeingangswelle. Die Energiespeicher 27 sind bevorzugt mit einer Steifigkeit ausgelegt, dass das über diese übertragende Drehmoment nicht zu einem Aufbrauch des Verdrehspiels führt und Drehmomentspitzen durch die elastischen Eigenschaften der Energiespeicher gedämpft werden. Dabei ist in besonders vorteilhafter Weise das Fliehkraftpendel 38 aktiv, so dass im elastischen Betriebsbereich beider Dämpferstufen 14, 15 diese zusätzlich schwingungsdämpfend wirksam ist.

### Bezugszeichenliste

- 1: Hydrodynamischer Drehmomentwandler
- 2: Drehachse
- 3: Gehäuse
- 4: Gehäuseteil
- 5: Gehäuseteil
- 6: Pumpenrad
- 7: Turbinenrad
- 8: Turbinenschaufel
- 9: Befestigungsmittel
- 10: Leitrad
- 11: Freilauf
- 12: Abtriebsnabe
- 13: Wandlerüberbrückungskupplung
- 14: Dämpferstufe
- 15: Dämpferstufe
- 16: Drehschwingungsdämpfer
- 17: Drehschwingungstilger
- 18: Kolben
- 19: Blattfeder
- 20: Kammer
- 21: Kammer
- 22: Reiblamelle
- 23: Gehäusewandung
- 24: Tasche
- 25: Scheibenteil
- 26: Befestigungsmittel
- 27: Energiespeicher
- 28: Ausnehmung
- 29: Energiespeicher
- 30: Anformung
- 31: Scheibenteil
- 32: Ausnehmung
- 33: Niet
- 34: Ausgangsteil
- 35: Eingangsteil
- 36: Flanschteil
- 37: Aufnahmeteil
- 38: Fliehkraftpendel
- 39: Tilgermasse
- 40: Niet
- 41: Eingangsteil
- 42: Ringteil
- 43: Zentrierumfang
- 44: Übertragungsverbindung
- 45: Zahnkranz
- 46: Außenverzahnung
- 47: Öffnung
- 48: Ausgangsteil
- 49: Ausschnitt

## Patentansprüche

1. Hydrodynamischer Drehmomentwandler (1) mit einem von einem Pumpenrad (6) angetriebenen Turbinenrad (7) sowie einem Gehäuse (3), in dem zusätzlich ein Drehschwingungsdämpfer (16) mit mehreren Dämpferstufen (14, 15) und eine Wandlerüberbrückungskupplung (13) untergebracht sind und wobei eine erste und eine zweite Dämpferstufe (14, 15) zwischen der Wandlerüberbrückungskupplung (13) und einer Abtriebsnabe (12), die zweite Dämpferstufe (15) zwischen dem Turbinenrad (7) und der Abtriebsnabe (12) angeordnet sind, wobei in dem hydrodynamischen Drehmomentwandler (1) ein Drehschwingungstilger (17) untergebracht ist, der parallel zu beiden Dämpferstufen (14, 15) wirksam angeordnet ist und ein Tilgermassen (39) aufnehmendes Aufnahmeteil (37) des Drehschwingungstilgers (17) ein Scheibenteil (31) des Eingangsteils (35) einer Dämpferstufe (15) bildet und das Aufnahmeteil (37) für die Tilgermassen axial zwischen der Wandlerüberbrückungskupplung (13) und der ersten Dämpferstufe (14) angeordnet ist, wobei die Wandlerüberbrückungskupplung (13) im geschlossenen Zustand axial in einer radial innerhalb von außerhalb des Drehmomentwandlers (1) vorgesehenen Befestigungsmitteln (9) angeordneten, in einer Gehäusewandung (23) ausgeformten Tasche (24) untergebracht ist und aus einem auf der Abtriebsnabe (12) zentrierten und an dem Gehäuse (3) axial verlagerbar und drehfest aufgenommen Kolben (18) gebildet ist, der eine zwischen diesem und dem Gehäuse (3) verspannbare Reiblamelle (22) zur Bildung eines Reibeingriffs axial beaufschlagt.

2. Hydrodynamischer Drehmomentwandler (1) nach Anspruch 1, **dadurch gekennzeichnet, dass** ein Eingangsteil (41) der ersten Dämpferstufe (14) und ein Ausgangsteil (48) der zweiten Dämpferstufe (15) aufeinander zentriert sind.

3. Hydrodynamischer Drehmomentwandler (1) nach Anspruch 1 oder 2, **dadurch gekennzeichnet, dass** zumindest ein Scheibenteil (25) zwei Dämpferstufen (14, 15) einteilig zugeordnet ist.

4. Hydrodynamischer Drehmomentwandler (1) nach einem der Ansprüche 1 bis 3, **dadurch gekennzeichnet, dass** Tilgermassen (39) des Drehschwingungstilgers (17) und über den Umfang angeordnete Energiespeicher (29) der ersten Dämpferstufe (14) auf radial gleicher Höhe und axial beabstandet voneinander angeordnet sind.

5. Hydrodynamischer Drehmomentwandler (1) nach Anspruch 4, **dadurch gekennzeichnet, dass** ein mittlerer Aufnahmedurchmesser der Energiespeicher (29) radial außerhalb des Turbinenrads (7) angeordnet ist.

6. Hydrodynamischer Drehmomentwandler (1) nach einem der Ansprüche 4 oder 5, **dadurch gekennzeichnet, dass** die Energiespeicher (29) das Turbinenrad (7) zumindest teilweise axial übergreifen.

7. Hydrodynamischer Drehmomentwandler (1) nach einem der Ansprüche 1 bis 6, **dadurch gekennzeichnet, dass** über den Umfang verteilte Energiespeicher (27) der zweiten Dämpferstufe (15) bezogen auf einen mittleren Aufnahmedurchmesser radial innerhalb von Turbinenschaufeln (8) des Turbinenrads (7) angeordnet sind.

8. Hydrodynamischer Drehmomentwandler (1) nach Anspruch 7, **dadurch gekennzeichnet, dass** sich die Energiespeicher (27) der zweiten Dämpferstufe (15) und das Turbinenrad (7) zumindest teilweise axial überschneiden.

9. Hydrodynamischer Drehmomentwandler nach einem der Ansprüche 1 bis 8, **dadurch gekennzeichnet, dass** im geschlossenen Zustand der Wandlerüberbrückungskupplung (13) der Drehschwingungstilger (17) zwischen den beiden Dämpferstufen (14, 15) wirksam ist.

10. Hydrodynamischer Drehmomentwandler nach einem der Ansprüche 1 bis 9, **dadurch gekennzeichnet, dass** der Drehschwingungstilger (17) drehfest mit dem Turbinenrad (7) verbunden ist.

11. Hydrodynamischer Drehmomentwandler nach Anspruch 10, **dadurch gekennzeichnet, dass** im geöffneten Zustand der Wandlerüberbrückungskupplung (13) der Drehschwingungstilger (17) drehfest mit dem Turbinenrad (7) verbunden ist.

## Claims

1. Hydrodynamic torque converter (1), with a turbine wheel (7) driven by a pump impeller (6) and with a housing (3) in which a torsional vibration damper (16) with a plurality of damper stages (14, 15) and a converter lock-up clutch (13) are additionally accommodated, and a first and a second damper stage (14, 15) being arranged between the converter lock-up clutch (13) and an output hub (12), the second damper stage (15) being arranged between the turbine wheel (7) and the output hub (12), the hydrodynamic torque converter (1) accommodating a torsional vibration absorber (17) which is arranged actively parallel to both damper stages (14, 15), and a reception part (37), receiving absorber masses (39), of the torsional vibration absorber (17) forming a disc part (31) of the input part (35) of one damper stage (15), and the reception part (37) for the absorber masses being arranged axially between the converter lock-up clutch (13) and the first damper stage (14), the converter lock-up clutch (13), in the closed state, being accommodated axially in a pocket (24) which is arranged radially within fastening means (9) provided outside the torque converter (1) and which is shaped in a housing wall (23) and being formed from a piston (18) which is centred on the output hub (12) and is received axially displaceably and fixedly in terms of rotation on the housing (3) and which acts axially upon a friction lamella (22), braceable between the said piston and the housing (3), so as to generate frictional engagement.

2. Hydrodynamic torque converter (1) according to Claim 1, **characterized in that** an input part (41) of the first damper stage (14) and an output part (48) of the second damper stage (15) are centred on one another.

3. Hydrodynamic torque converter (1) according to Claim 1 or 2, **characterized in that in that** at least one disc part (25) is assigned in one piece to two damper stages (14, 15).

4. Hydrodynamic torque converter (1) according to one of Claims 1 to 3, **characterized in that** absorber masses (39) of the torsional vibration absorber (17) and energy accumulators (29) of the first damper stage (14) which are arranged over the circumference are arranged at a radially identical height and so as to be spaced apart from one another axially.

5. Hydrodynamic torque converter (1) according to Claim 4, **characterized in that** an average reception diameter of the energy accumulators (29) is arranged radially outside the turbine wheel (7).

6. Hydrodynamic torque converter (1) according to either one of Claims 4 and 5, **characterized in that** the energy accumulators (29) engage at least partially axially over the turbine wheel (7).

7. Hydrodynamic torque converter (1) according to one of Claims 1 to 6, **characterized in that** energy accumulators (27) of the second damper stage (15) which are distributed on the circumference are arranged radially within turbine blades (8) of the turbine wheel (7) with respect to an average reception diameter.

8. Hydrodynamic torque converter (1) according to Claim 7, **characterized in that** the energy accumulators (27) of the second damper stage (15) and the turbine wheel (7) at least partially overlap one another axially.

9. Hydrodynamic torque converter according to one of Claims 1 to 8, **characterized in that**, in the closed state of the converter lock-up clutch (13), the torsional vibration absorber (17) is active between the two damper stages (14, 15).

10. Hydrodynamic torque converter according to one of Claims 1 to 9, **characterized in that** the torsional vibration absorber (17) is connected fixedly in terms of rotation to the turbine wheel (7).

11. Hydrodynamic torque converter according to Claim 10, **characterized in that**, in the open state of the converter lock-up clutch (13), the torsional vibration absorber (17) is connected fixedly in terms of rotation to the turbine wheel (7).

## Revendications

1. Convertisseur hydrodynamique (1) de couple de rotation présentant une roue de turbine (7) entraînée par une roue de pompe (6) ainsi qu'un boîtier (3) dans lequel un amortisseur (16) d'oscillations en rotation présentant plusieurs étages d'amortissement (14, 15) et un embrayage (13) de contournement du convertisseur sont de plus installés,
un premier et un deuxième étage d'amortissement (14, 15) étant disposés entre l'embrayage (13) de contournement du convertisseur et un moyeu entraîné (12),
le deuxième étage d'amortissement (15) étant disposé entre la roue de turbine (7) et le moyen entraîné (12),
un amortisseur (17) d'oscillations en rotation disposé de manière à agir parallèlement aux deux étages d'amortissement (14, 15) étant installé dans le convertisseur hydrodynamique (1) de couple de rotation et une pièce de réception (37) de l'amortisseur (17) d'oscillation en rotation qui reprend une masse d'amortissement (39) formant une partie en disque (31) de la partie d'entrée (35) d'un étage d'amortissement (15) et la pièce de réception (37) pour les masses d'amortissement étant disposée axialement entre l'embrayage (13) de contournement de convertisseur et le premier étage d'amortissement (14), l'embrayage (13) de contournement du convertisseur, en position fermée, étant placé axialement dans une poche (24) formée dans une paroi (23) du boîtier et disposée radialement à l'intérieur de moyens de fixation (9) prévus à l'extérieur du convertisseur (1) de couple de rotation et étant formé par un piston (18) centré sur le moyeu entraîné (12), apte à être monté axialement sur le boîtier (3) et logé à rotation solidaire, qui agit axialement sur une lamelle de frottement (22) qui peut être serrée entre ce piston et le boîtier (3) pour former un engagement par frottement.

2. Convertisseur hydrodynamique (1) de couple de rotation selon la revendication 1, **caractérisé en ce qu'**une partie d'entrée (41) du premier étage d'amortissement (14) et une partie de sortie (48) du deuxième étage d'amortissement (15) sont centrées l'un par rapport à l'autre.

3. Convertisseur hydrodynamique (1) de couple de rotation selon les revendications 1 ou 2, **caractérisé en ce qu'**au moins une partie en disque (25) est associée d'un seul tenant aux deux étages d'amortissement (14, 15).

4. Convertisseur hydrodynamique (1) de couple de rotation selon l'une des revendications 1 à 3, **caractérisé en ce que** des masses d'amortissement (39) de l'amortisseur (17) d'oscillation en rotation et des accumulateurs d'énergie (29) du premier étage d'amortissement (14), disposées à la périphérie, sont disposés à la même hauteur radiale et à distance axiale les uns des autres.

5. Convertisseur hydrodynamique (1) de couple de rotation selon la revendication 4, **caractérisé en ce qu'**un diamètre moyen de reprise de l'accumulateur d'énergie (29) est situé radialement à l'extérieur de la roue de turbine (7).

6. Convertisseur hydrodynamique (1) de couple de rotation selon l'une des revendications 4 ou 5, **caractérisé en ce que** les accumulateurs d'énergie (29) chevauchent axialement la roue de turbine (7) au moins partiellement.

7. Convertisseur hydrodynamique (1) de couple de rotation selon l'une des revendications 1 à 6, **caractérisé en ce que** des accumulateurs d'énergie (27) du deuxième étage d'amortissement (15), répartis à la périphérie, sont disposés radialement à l'intérieur d'aubes de turbine (8) de la roue de turbine (7) par rapport à un diamètre moyen de reprise.

8. Convertisseur hydrodynamique (1) de couple de rotation selon la revendication 7, **caractérisé en ce que** les accumulateurs d'énergie (27) du deuxième étage d'amortissement (15) et de la roue de turbine (7) se coupent axialement au moins en partie.

9. Convertisseur hydrodynamique de couple de rotation selon l'une des revendications 1 à 8, **caractérisé en ce que** lorsque l'embrayage (13) de contournement du convertisseur est en position fermée, l'amortisseur (17) d'oscillation en rotation agit entre les deux étages d'amortissement (14, 15).

10. Convertisseur hydrodynamique de couple de rotation selon l'une des revendications 1 à 9, **caractérisé en ce que** l'amortisseur (17) d'oscillation en rotation est relié à rotation solidaire à la roue de turbine (7).

11. Convertisseur hydrodynamique de couple de rotation selon l'une des revendications 10, **caractérisé en ce que** lorsque l'embrayage (13) de contournement de convertisseur est en position ouverte, l'amortisseur (17) d'oscillation en rotation est relié à rotation solidaire à la roue de turbine (7).
